Europäisches Patentamt

European Patent Office

Office européen des brevets

(19)

(11) Publication number : **0 445 729 B1**

(12) **EUROPEAN PATENT SPECIFICATION**

(45) Date of publication of patent specification :
07.12.94 Bulletin 94/49

(51) Int. Cl.⁵ : **G05B 13/04, G05B 17/02**

(21) Application number : **91103305.8**

(22) Date of filing : **05.03.91**

(54) **Model following control device and method.**

(30) Priority : **06.03.90 JP 55249/90**

(43) Date of publication of application :
**11.09.91 Bulletin 91/37**

(45) Publication of the grant of the patent :
**07.12.94 Bulletin 94/49**

(84) Designated Contracting States :
**DE FR GB**

(56) References cited :
EP-A- 0 159 103
US-A- 4 385 362
US-A- 4 407 013
US-A- 4 458 321
US-A- 4 679 136
US-A- 4 864 490
US-A- 4 881 160

(73) Proprietor : **MATSUSHITA ELECTRIC
INDUSTRIAL CO., LTD.**
**1006, Oaza Kadoma**
**Kadoma-shi, Osaka-fu, 571 (JP)**

(72) Inventor : **Doyama, Yoshiaki**
**2-5-30-205, Miyanosaka**
**Hirakata-shi, Osaka-fu (JP)**
Inventor : **Ebisu, Koji**
**1-16-6, Myokenzaka**
**Katano-shi, Osaka-fu (JP)**
Inventor : **Ozeki, Masataka**
**1-57, Nishigodori**
**Moriguchi-shi, Osaka-fu (JP)**
Inventor : **Matsui, Keizo**
**6-12, Manchidani-cho**
**Nishinomiya-shi, Hyogo-ken (JP)**

(74) Representative : **Eisenführ, Speiser & Partner**
**Martinistrasse 24**
**D-28195 Bremen (DE)**

EP 0 445 729 B1

## Description

The present invention relates to a so-called robust control system which enables control even when the characteristics of the control object (plant) change, and more particularly, to a model following control device and method for controlling a control object to track or follow a reference model. The control method is specifically effective for controlling targets which change dimensionally instead of numerically. Specifically, the present invention is a combination of complex controls such as robot position control and working force control, control of room temperature and humidity control in an air conditioning system, and refrigerating cycle control.

Reference model adaptive control is one prior art method of controlling a control object comprising unknown parameters. There are two ways to implement this control method: one employing as an adaptive mechanism a function which varies parameters, and one having enhanced robustness to follow the model without changing parameters when parameters do not differ significantly.

The adaptive control method using parametric changes has been described at length in the literature, including "Adaptive Control" (Shokodo, 1984) by Ichikawa Kunihiko, but this method requires that the structure of the plant be known and that changes in plant parameters occur at a relatively slow rate. The robust control method, however, does not require the structure of the complete plant to be known, and is also effective controlling plants wherein the changes in plant parameters occur at a relatively fast rate.

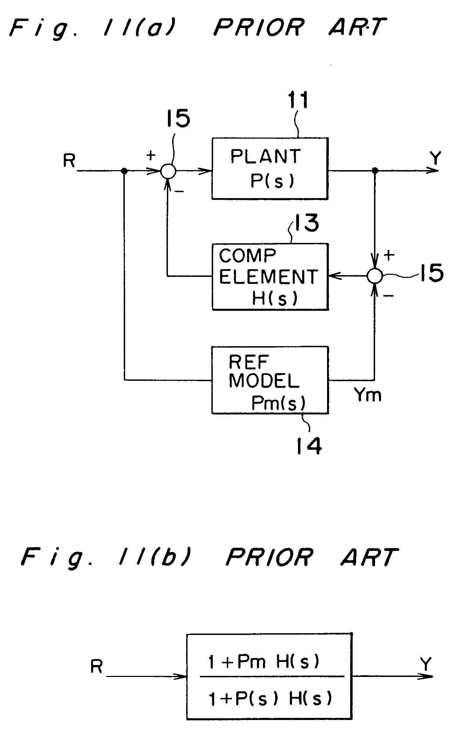

As known from EP-A-0159103, Figs. 11(a) and 11(b) show the basic configuration of an adaptive control system employing a method with enhanced robustness. The transfer functions P(s), Pm(s), and H(s) respectively for the plant 11, model 14, and compensating element 13 are connected as shown in Fig. 11(a). As apparent from the figure, the target value R is input to the model 14 and to a comparator 15. The response of the model plant 14 is also input to a comparator 16. The first comparator 15 compares the target value R with the output of the compensating element 13, and sends the result to the plant 11. The output Y from the plant 11 is compared by the other comparator 16 with the output Ym of the model plant, and the result is input to the compensating element 13. Fig. 11(b) is a simplification of the block diagram in Fig. 11(a) into one element.

The construction of the compensating element 13 is described next. The compensating element 13 is assumed to be the inverse of the transfer characteristic Pm(s) of the model plant 14 multiplied by a gain constant K, and is expressed as shown in equation 1.

$$H(s) = K/Pm(s) \quad (1).$$

At this time the transfer characteristic of Fig. 11(b) is:

$$Y/R = (1 + K) * P(s) / (1 + K * P(s)/Pm(s)) \quad (2).$$

Thus, when $K \rightarrow \infty$, the value of Y/R is Pm(s). In other words, if the value K is great, the characteristics of the system approach the characteristic Pm(s) of the model. Specifically, an input/output relationship which is unrelated to the characteristic P(s) of the plant is obtained.

A conventional control method as described hereinabove cannot be used for applications wherein the desired response differs according to the control object because only one reference model is defined. A robot, however, has multiple control modes, including a position control mode and a force control mode, and the desired response of the control system will obviously vary according to the object. In addition, even if there is a single target value, it is desirable to have a response characteristic which enables the target value to be quickly approached even though the reference model results in unstable response, and tracks a stable reference model when the target value is approached.

Furthermore, there are cases in which it is difficult to clearly express the desirable response as a formula, and there are also cases in which the desirable response can only be expressed by means of an input-output relationship. It is difficult to apply the prior art methods as described hereinabove to these cases.

Furthermore, while "fuzzy control" has attracted attention in recent years as one method comprising such a control system, currently proposed fuzzy logic control methods define procedures for handling conditions of a specific deviation from a target value, but are not easily adapted to defining what the resulting response should be. It has therefore been necessary to adjust the membership constant of the fuzzy controller through a process of trial and error to provide a desired response. In addition, even after the membership constant is adjusted, the same or similar response will not be necessarily achieved when the plant characteristics change.

Therefore, an object of the present invention is to provide a model following control system which suppresses the effects of parameter changes by increasing the robustness of the system, and is characterized by providing a fuzzy reference model for obtaining a desirable response to any given input data, comparing plant output data and fuzzy model output data, inputting the result of the comparison to a first high gain means, inputting the output data from the first high gain means to the fuzzy reference model and comparing the first high gain means output data with the target value, inputting the result of this second comparison to a second high gain means, and using the output data of said second high gain means for plant control.

This method is achieved in a robot control system for which the desirable response characteristics for the position and the force acting on working elements are set as a reference model using fuzzy sets based on the position data of the working elements, and is characterized by a means for detecting the actual force and position data with respect to a target force value and target position value according to specific target conditions, a first and a second high gain means, a means for comparing the detected force and position data with the response output of the reference model to the first high gain means, a first high gain means which amplifies the comparison result, a target value comparison means which compares the first high gain means output, the target force value, and the target position value, a second high gain means which takes as an input the comparison result output from the target value comparison means, and a means for adding two output results of the second high gain means, such that said robot force-position control device thereby applies the added result as the actuator drive command.

By using a high gain element in a forward transfer element in a system comprising reference model characteristics in the feedback loop of a minor loop, the characteristics of the loop approximate the inverse characteristics of the reference model. A control system which tracks the reference model for an input can be realized when considered as a whole.

In a robot control system, because when the distance from the constraint point is great due to the object piece, a reference model for position control is selected, and when the gripping point is approached fuzzy logic selects the reference model for force control, stable position control and force control can both be achieved to desirable control characteristics even if the position of the gripping point varies somewhat within the working space.

## BRIEF DESCRIPTION OF THE DRAWINGS

These and other objects and features of the present invention will become clear from the following description taken in conjunction with the preferred embodiments thereof with reference to the accompanying drawings throughout which like parts are designated by like reference numerals, and in which:

Fig. 1 is a block diagram of a preferred embodiment of a control method according to the present invention;

Fig. 2(a) is a block diagram of a preferred embodiment of a control method according to the present invention;

Fig. 2(b) is a block similar to Fig. 2(a), but showing a modification thereof;

Fig. 3 is a block diagram of essential components when plural reference models are used;

Fig. 4 is a block diagram of a method wherein plural high gain elements are used;

Figs. 5(a) and 5(b) are block diagrams showing the principle of the minor loop in Fig. 1;

Fig. 6(a) is a block diagram of the construction of an integrating means;

Fig. 6(b) is a block diagram similar to Fig. 6(a), but showing a modification thereof;

Fig. 7 is a block diagram of a control method using a neural network;

Fig. 8(a) is a block diagram of essential elements according to an alternative embodiment of the present invention using a neural network;

Fig. 8(b) is a block diagram showing an example of a neural network;

Fig. 9 is a block diagram of a control method according to the present invention as applied to force-position control in a robot;

Fig. 10(a) shows a fuzzy reference model statements;

Fig. 10(b) show the principle of fuzzy control of operation of the reference model applied in Fig. 10; and

Figs. 11(a) and 11(b) are block diagrams of a prior art control method.

## DETAILED DESCRIPTION OF THE PREFERRED EMBODIMENTS

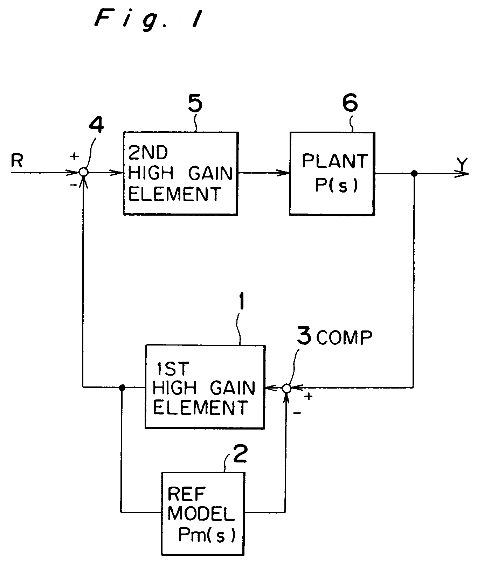

Referring to Fig. 1, an overall block diagram of the invention is shown. In Fig. 1, a target value R is input to a comparator 4 where it is compared with an output of a first high gain element 1. The result of the comparison passes through a second high gain element 5, and becomes the operating amount of a plant 6. The control result Y of the plant 6 is input to another comparator 3, where it is compared with the output of the reference model 2. The result of the comparison is sent to the first high gain element 1. The output of the first high gain element 1 is sent to the first comparator 4, where it is compared with the target value R, and is also sent to the reference model 2.

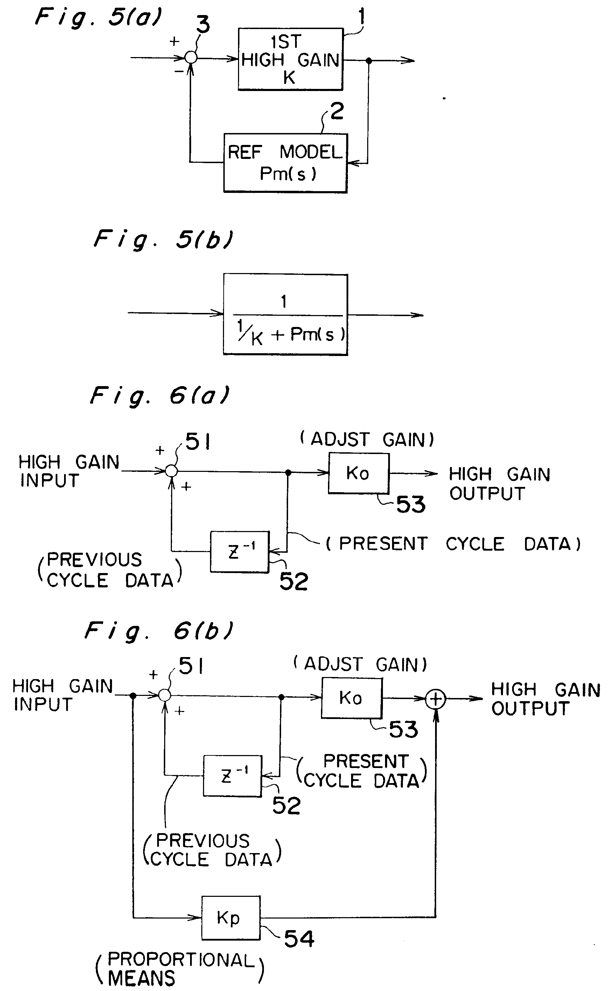

Fig. 5(a) shows the construction of a minor loop comprising the first high gain element 1, a reference model 2, and a comparator 3. In this minor loop the transfer characteristic of the high gain element 1 is represented as K, and the transfer characteristic of the reference model 2 is Pm(s). Fig. 5(b) is a simplification of the loop shown in Fig. 5(a) as a single input-output device. Specifically, the input/output characteristic can be expressed as one part of $1/\{(1/K) + Pm(s)\}$. Thus, if the value K is sufficiently great, the I/O characteristic will be the inverse of the reference model. This means that the inverse characteristics of the reference model Pm are present in the feedback loop shown in Fig. 1, and as a result it is therefore possible to achieve a model following control method.

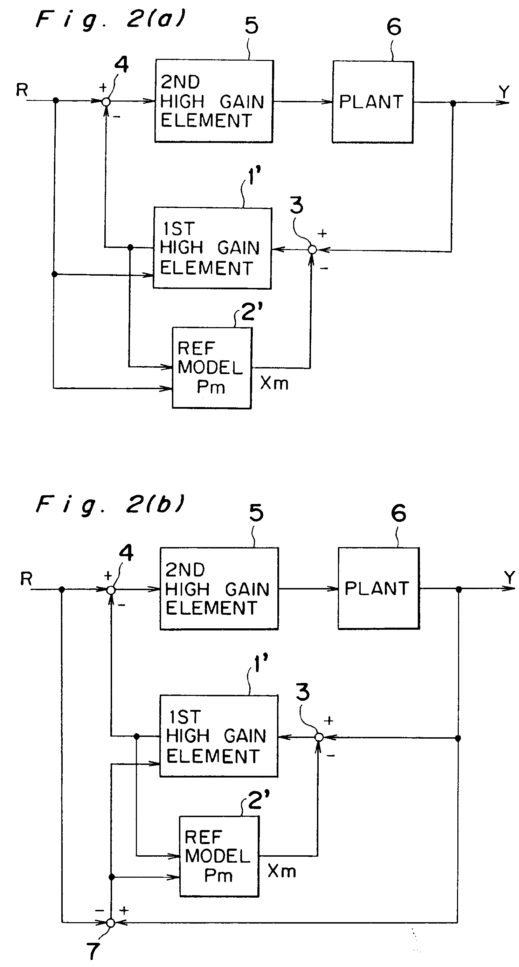

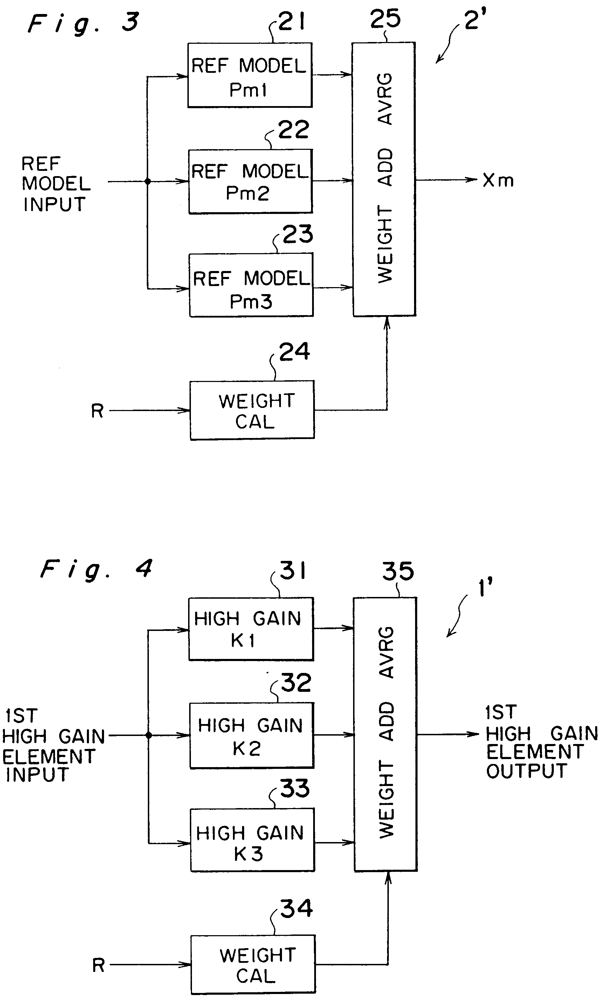

Referring to Fig. 2(a) an overall block diagram of an alternative embodiment of the invention is shown which comprises plural reference models. Unlike the embodiment shown in Fig. 1, in this embodiment, the reference model 2' and the first high gain element 1' vary relatively to the target value R. The arrangements of the reference model 2' and the first high gain element 1' are shown in Figs. 3 and 4 in which Fig. 3 shows an arrangement using plural reference models, and Fig. 4 shows an arrangement using plural high gain elements.

In the embodiment using plural reference models, desirable responses are set for specific target values. In Fig. 3, the reference model signal is applied to the plural reference models 21, 22 and 23. The output of each reference model is input to a weighting-adding-averaging means 25. The weighting-adding-averaging means 25 weights, adds, and averages the output of each reference model, and outputs the result as reference model output Xm. The weight used by the weighting-adding-averaging means 25 is determined by the weight calculator 24 based on the target value R.

The operation of the weight calculator 24 enables computation of the weight as the suitability to each reference model based on the current target value R, i.e., it calculates how suitable the target value R is to the target value set for each reference model. This operating method is equivalent to the pre-stage calculation of a fuzzy control. For example, the suitability of each reference model can be set as a suitable membership function for a target value function, or as a distance from a target value provided with reference models.

The same process is shown in Fig. 4 using plural high gain elements. The method of calculating the weighting in the method shown in Fig. 4 does not necessarily use the same results as those used in the method in Fig. 3. For example, different membership functions may be used. A control system for more complex target values can thus be achieved by changing the reference model according to the target value.

Referring to Fig. 6(a), a block diagram of the first or second high gain element shown in Figs. 1, 2(a) and 2(b) is shown. The description herein is used in compliance with the wording used for computerizing the system. The input is applied to adder 51 where it is added to the one previous input value. The result is then output to delay 52 and to gain control 53 from which an appropriate gain Kc is obtained and output. The gain Kc may vary according to the element. Because these elements include cumulative sums, an integration operation is carried out. By using the system shown in Fig. 6(a), an integration, i.e., high gain in a low frequency band, can be achieved. It is to be noted that a high gain means in the present invention shall not be limited to an integrating device. For example, a proportional means 54 may be provided parallel with the integration means, as shown in Fig. 6(b).

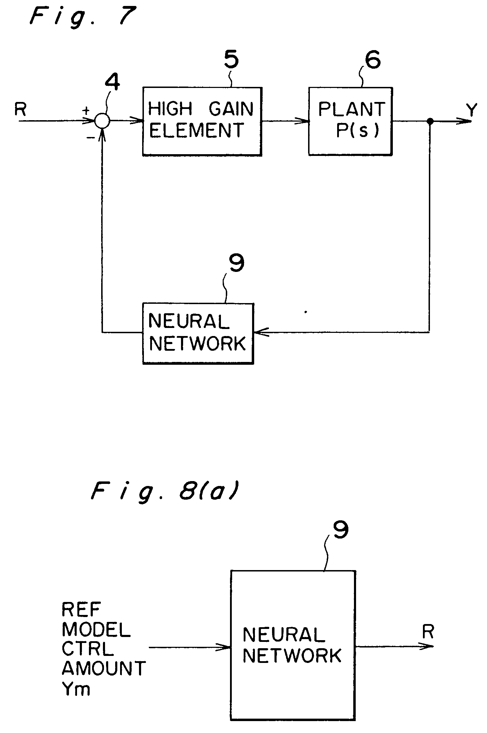

Referring to Fig. 7 a block diagram of another embodiment is shown which is applicable to cases in which it is difficult to develop a numeric model, and the reference model is therefore developed based on I/O characteristics only. Specifically, the target value R is input to a comparator 4 where it is compared with the output from a neural network 9. The result of the comparison is passed through the second high gain element 5 to the plant 6. The output Y from the plant 6 is input to the neural network 9, thus forming a feedback loop.

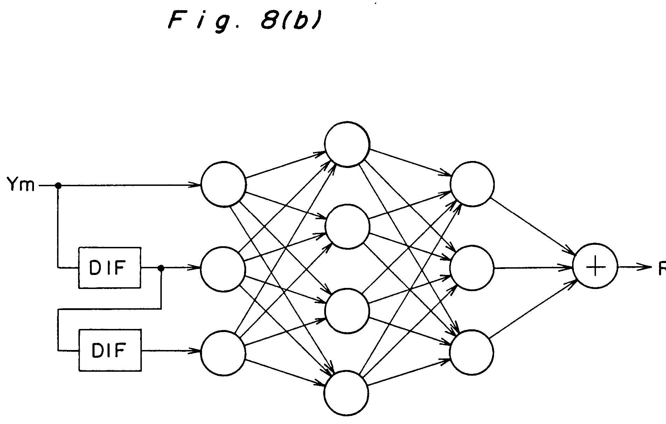

Fig. 8(a) shows the method of defining the input and output of the neural network 9. Specifically, the input/output relationship of the neural network is inverted to create a learning function. In other words, a reference model value which is expected to be produced from the plant is used as an input, and a target value is used as as an output. The construction and learning functions, including a so-called "Back propagation" of such neural networks is disclosed in a report "Parallel Distributed Processing" by D.E. Rumelhart, J.L. McClelland, and the PDP Research Group, in MIT Press, 1986. An example of the neural network is shown in Fig. 8(b) in which a desired control amount Y and its differential value and second order differential values are applied as inputs to the learned neural network.

It is to be noted that, as shown in Fig. 2(b), a system which switches between plural reference models based on the difference between a target value R and a control output value Y can be easily achieved by applying the basic concepts of the present invention. The system shown in Fig. 2(b) further has a comparator 7 for the comparison between the target value R and the control output value Y. The compared result is applied to the reference model 2 and the first high gain element 1.

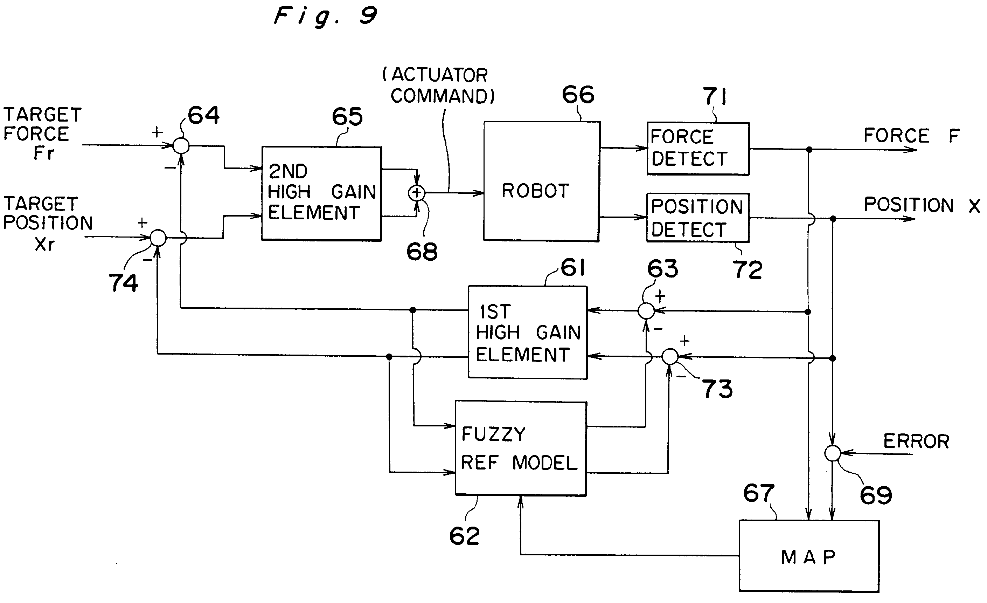

Referring to Fig. 9, a block diagram of a system for controlling the force and positioning of a robot arm is shown, in which system the model following control device according to the present invention is employed. In the following description it is so assumed that the robot arm is required to quickly grasp and move an object piece which is easily damaged when grasped with excess force. In addition, the touching and grasping force of the object piece by the robot is previously set in consideration of the softness of the object piece. Furthermore, the position data of the object piece is detected by a visual system (not shown) using a map 67 that can identified the location of the work space. In addition, for controlling a manipulator, the coordinate system for actuator drive and the coordinate system for the end effector are generally expressed by a combination of a rotation (or polar) coordinate system and an Cartesian coordinate system, but in the embodiment shown in Fig. 9, the coordinate system for actuator drive and the coordinate system for the end effector are expressed by a one-degree-freedom system with 1:1 correspondence between the two coordinate systems, one for actuator drive and the other for the end effector, for the sake of brevity.

The output data of a high gain element 61 is compared with a target force value Fr and a target position Xr by comparators 64 and 74, respectively. The result of the comparisons by comparators 64 and 74 are input to a second high gain element 65. The output of the second high gain element 65 for each of the inputs is input to the adder 68 where the two values are added together. The sum is output from the adder 68 as the actuator drive command is applied to the robot arm 66 to change the mechanical parameters (position and force) of the robot 66.

The changed force and position are respectively detected by force detector 71 and position detector 72. The detected force data is sent to the comparator 63 and work space map 67, and the position data is sent through the comparator 73 and error mixer 69 to the work space map 67. The error mixer 69 is to provide a conceptual correspondence between the detected position data and the coordinates of the work space map 67.

The detected force data is compared with the reference model force data output by the comparator 63, and the detected position data is compared with the reference model position data output by the comparator 73. The results of the comparison by the comparators 63 and 73 are input to the high gain element 61 and amplified. The output result of the high gain element 61 is input to the reference model 62, thus forming a minor loop comprising the high gain element 61, reference model 62, and comparators 63 and 73.

This minor loop forms an inverse characteristic element to the reference model as was described previously above. A force and position control loop is formed by inputting the output of the high gain element 61 to a force data-target value comparator 64 and a position data-target value comparator 74. The position data input to the work space map 67 is compared with the map contents and the current position data to calculate the distance from the gripping point. The calculated distance data is then input to the reference model 62 in the control loop.

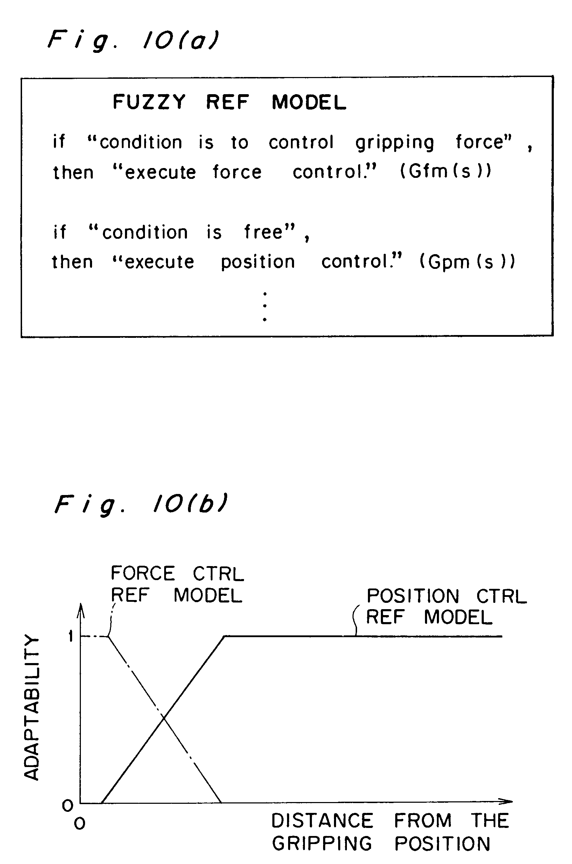

The reference model 62 is a means for fuzzy selection of the force control mode and position control mode based on the calculated distance from the gripping point. The construction of the reference model 62 is shown in Fig. 10(a). The reference model as a collection of logic expressions including two rules. The first rule states that if the condition is to control the gripping force, then execute force control, for which the desired response characteristic is Gfm(s); the second rule states that if the condition is free, then execute position control, for which the desired response characteristic is Gpm(s). These two rules closely approximate the rules applied in the sequence of actions by which a person grasps an object.

Fig. 10(b) shows the weighting of the two rules based on the distance from the gripping point. Specifically, force control is applied 100% when the current position is at the gripping point, position control is applied 100% when the distance from the gripping point is sufficiently great, and at all points therebetween there is a fuzzy selection of force and position controls. Hybrid control of force and position, i.e., compliance control, is applied in this range. By constructing a control system as thus described, a position control mode is assumed when the end effector is sufficiently separated from the gripping point, thus providing a control system whereby the target position can be approached as quickly as possible, and when the effector is at the gripping position, the force control mode is assumed to enable soft gripping of easily damaged articles. Furthermore, compliance control is applied near the gripping point, providing a low rigidity position control mode. It is thus possible to control force application so that the object piece is not damaged when there is a degree of error in the gripping point coordinates and the object piece is contacted. Contact can be detected by the force detector 71, the output of which is used to correct the work space map 67, thus making it possible to shift quickly to the force control mode even when there is error in the object piece position.

As described hereinabove, a control system for use in situations with complex target conditions and plural control objectives can be achieved by means of the present invention. Furthermore, a control system that responds more quickly when there is one target condition can be achieved by defining reference models according to the deviation from the target. In addition, by defining a desired response, it is not necessary to consider the current response status of the control system, and a control system which is easier to use can be achieved. Furthermore, a control system using a reference model can be achieved for even those cases in which the reference model cannot be clearly expressed as a numeric equation by using a neural network as a reference model to learn from the relationship of inputs thereto and outputs therefrom.

In addition, good force control and position control can be achieved even if the position of the object piece shifts within the work space, and high speed, high reliability operation can be thus be achieved, by applying this method to force-position control in a robot system.

## Claims

1. A model following control device comprising:
   a first comparator means (4) having first and second inputs and an output for producing a difference therebetween, said first input provided for receiving a target value (R);
   a plant means (6) processing an output from said first comparator means (4) with a predetermined first transfer function (P(s)) for producing a control amount (Y);

a second comparator means (3) having first and second inputs and an output for producing a difference therebetween, said first input provided for receiving said control amount (Y);

reference model means (2);

characterised by a first high gain element (1) for receiving an output from said second comparator (3) and for producing an output to said second input of said first comparator means (4); and

by the reference model means (2) receiving said output from said first high gain element (1) and providing an output to said second input of said second comparator means (3).

2. A model following control device as claimed in Claim 1, further comprising a second high gain element (2) inserted between said output of said first comparator (4) and said plant means (6).

3. A model following control device as claimed in Claim 1, characterised in that said first high gain element (1) comprises an integration means.

4. A model following control device as claimed in Claim 1, characterised in that said second high gain element (2) comprises an integration means.

5. A model following control device as claimed in Claim 1, characterised in that said reference model is a fuzzy reference model (62) for fuzzy selection between first and second control modes.

6. A model following control device as claimed in Claim 1, characterised in that said reference model is a neural network.

7. A model following control device as claimed in Claim 1:
characterised in that said first comparator means (4) comprises first and second comparator elements (64, 74), each having first and second inputs for receiving a target force value (Fr) and a target position value (Xr), respectively, and an output;

said plant means (6) comprises a robot arm (66) and force detecting means (71) and a position detecting means (72) for detecting the gripping force and arm position of said robot arm, respectively;

said second comparator means (3) comprises third and fourth comparator elements (63, 73), each having first and second inputs for receiving a detected force value (F) and a detected position value (X), respectively, and an output;

said first high gain element (61) has first and second inputs for receiving outputs from said third and fourth comparator elements (63, 73) and first and second outputs for producing outputs to said second input of said first and second comparator elements (63, 73), respectively; and

said reference model means (2) comprises a fuzzy reference model (62) for receiving said outputs from said first high gain element (61) and providing outputs to said second input of said third and fourth comparator elements (63, 73), respectively.

8. A model following control device as claimed in Claim 7, wherein a part based on the position data of the fuzzy reference model (62) is corrected using the data of the detected force.

9. A model following control method comprising the steps of:
setting desirable characteristics as a reference model of a plant;

obtaining the output from said reference model for a given input data,

obtaining a difference between the output data of a plant and the output data of the normal model ; characterised by :

inputting said difference to a first high gain means;

inputting an output data of said high gain means to a said reference model;

inputting the difference between the output data of said first high gain means and a target command data to a second high gain means; and

controlling said plant using the output data of said second high gain means.

**Patentansprüche**

1. Modellbasierte Steuer- oder Regelungseinrichtung, umfassend:
eine erste Komparatoreinrichtung (4), die einen ersten und einen zweiten Eingang sowie einen Ausgang aufweist und zur Erzeugung der Differenz von je zwei Eingangssignalen vorgesehen ist, wobei der erste Eingang zum Empfang eines Zielwertes (R) vorgesehen ist; eine Betriebseinrichtung (6), die ein Ausgangssignal der ersten Komparatoreinrichtung (4) mit einer vorbestimmten ersten Übertragungsfunktion (P(s)) verarbeitet, um eine Regel- oder Steuergröße (Y) zu erzeugen;

eine zweite Komparatoreinrichtung (3), die einen ersten und einen zweiten Eingang sowie einen Ausgang aufweist und zur Erzeugung der Differenz von je zwei Eingangssignalen vorgesehen ist, wobei der erste Eingang zum Empfang der Regel- oder Steuergröße (Y) vorgesehen ist; eine Referenzmodell-Einrichtung (2); dadurch gekennzeichnet, daß ein erstes Hochverstärkungselement (1) zum Empfang eines Ausgangssignals des zweiten Komparators (3) und zum Erzeugen eines Ausgangssignals am zweiten Eingang der ersten Komparatoreinrichtung (4) vorgesehen ist, und daß die Referenzmodell-Einrichtung (2) das Ausgangssignal des ersten Hochverstärkungselements (1) empfängt und ein Ausgangssignal am zweiten Eingang der zweiten Komparatoreinrichtung (3) erzeugt.

2. Modellbasierte Steuer- oder Regeleinrichtung nach Anspruch 1, weiter aufweisend ein zweites Hochverstärkungselement (2), welches zwischen den Ausgang des ersten Komparators (4) und die Betriebseinrichtung (6) geschaltet ist.

3. Modellbasierte Steuer- oder Regeleinrichtung nach Anspruch 1, dadurch gekennzeichnet, daß das erste Hochverstärkungselement (1) eine Integrationseinrichtung umfaßt.

4. Modellbasierte Steuer- oder Regeleinrichtung nach Anspruch 1, dadurch gekennzeichnet, daß das zweite Hochverstärkungselement (2) eine Integrationseinrichtung umfaßt.

5. Modellbasierte Steuer- oder Regeleinrichtung nach Anspruch 1, dadurch gekennzeichnet, daß das Referenzmodell ein Fuzzy-Referenzmodell (62) zur Fuzzy-Selektion zwischen einem ersten und einem zweiten Regel- oder Steuermodus ist.

6. Modellbasierte Steuer- oder Regeleinrichtung nach Anspruch 1, dadurch gekennzeichnet, daß das Referenzmodell ein neuronales Netz ist.

7. Modellbasierte Steuer- oder Regeleinrichtung nach Anspruch 1, dadurch gekennzeichnet, daß die erste Komparatoreinrichtung (4) ein erstes und ein zweites Komparatorelement (64, 74) aufweist, von denen jedes einen ersten und einen zweiten Eingang zum Empfang eines Kraft-Zielwertes (Fr) bzw. eines Positions-Zielwertes (Xr) und einen Ausgang aufweist; die Betriebseinrichtung (6) einen Roboterarm (66) und eine Krafterfassungseinrichtung (71) sowie eine Positionserfassungseinrichtung (72) zum Erfassen der Greifkraft bzw. der Lage des Roboterarms aufweist; die zweite Komparatoreinrichtung (3) ein drittes und ein viertes Komparatorelement (63, 73) aufweist, von denen jedes einen ersten und einen zweiten Eingang zum Empfang eines erfassten Kraft-Wertes (F) bzw. eines erfassten Positionswertes (X) und einen Ausgang aufweist; das erste Hochverstärkungselement (61) einen ersten und einen zweiten Eingang zum Empfang von Ausgangssignalen des dritten und des vierten Komparatorelements (63, 73) aufweist sowie einen ersten und einen zweiten Ausgang zum Erzeugen von Ausgangssignalen an dem zweiten Eingang des ersten bzw. des zweiten Komparatorelements (63, 73); und die Referenzmodell-Einrichtung (2) ein Fuzzy-Referenzmodell (62) zum Empfang der Ausgangssignale des ersten Hochverstärkungselements (61) und zum Erzeugen von Ausgangssignalen am zweiten Eingang des dritten bzw. des vierten Komparatorelements (63, 73) umfaßt.

8. Modellbasierte Steuer- oder Regeleinrichtung nach Anspruch 7, wobei eine Komponente basierend auf den Positionsdaten des Fuzzy-Referenzmodells (62) durch Verwendung der Daten der erfassten Kraft korrigiert wird.

9. Verfahren zur modellbasierten Steuerung oder Regelung mit den Schritten: Festlegen von gewünschten Charakteristiken als Referenzmodell einer Betriebseinrichtung; Erzeugen des Ausgangssignals des Referenzmodells für einen vorgegebenen Eingabedatensatz, Erzeugen einer Differenz zwischen den Ausgangsdaten einer Betriebseinrichtung und den Ausgangsdaten des Normal-Modells; gekennzeichnet durch Eingeben der Differenz in eine erste Hochverstärkungseinrichtung; Eingeben ausgegebener Daten der Hochverstärkungseinrichtung in das Referenzmodell; Eingeben der Differenz zwischen den Ausgangsdaten der ersten Hochverstärkungseinrichtung und einem Ziel-Befehlswert in eine zweite Hochverstärkungseinrichtung; und Regeln oder Steuern der Betriebseinrichtung unter Verwendung der Ausgangsdaten der zweiten Hochverstärkungseinrichtung.

**Revendications**

1. Dispositif de commande à suivi de modèle comprenant :
   - un premier moyen de comparateur (4) possédant des première et seconde entrées et une sortie pour en produire une différence, ladite première entrée étant prévue pour recevoir une valeur cible (R);
   - un moyen d'installation (6) traitant une sortie dudit premier moyen de comparateur (4) avec une première fonction prédéterminée de transfert (P(s)) pour produire une valeur de commande (Y);

- un second moyen de comparateur (3) possédant des première et seconde entrées et une sortie pour en produire une différence, ladite première entrée étant prévue pour recevoir ladite valeur de commande (Y);
- un moyen de modèle de référence (2); dispositif caractérisé par :
- un premier élément à haut gain (1) pour recevoir une sortie dudit second comparateur (3) et pour produire une sortie vers ladite seconde entrée dudit premier moyen de comparateur (4); et
- le moyen de modèle de référence (2) recevant ladite sortie dudit premier élément à haut gain (1) et fournissant une sortie à ladite seconde entrée dudit second moyen de comparateur (3).

2. Dispositif de commande à suivi de modèle selon la revendication 1, comprenant, de plus, un second élément à haut gain (2) inséré entre ladite sortie dudit premier comparateur (4) et ledit moyen d'installation (6).

3. Dispositif de commande à suivi de modèle selon la revendication 1, caractérisé en ce que ledit première élément à haut gain (1) comprend un moyen d'intégration.

4. Dispositif de commande à suivi de modèle selon la revendication 1, caractérisé en ce que ledit second élément à haut gain (2) comprend un moyen d'intégration.

5. Dispositif de commande à suivi de modèle selon la revendication 1, caractérisé en ce que ledit modèle de référence est un modèle de référence flou (62) pour une sélection floue entre les premier et second modes de commande.

6. Dispositif de commande à suivi de modèle selon la revendication 1, caractérisé en ce que ledit modèle de référence est un réseau neural.

7. Dispositif de commande à suivi de modèle selon la revendication 1, caractérisé en ce que :

ledit premier moyen de comparateur (4) comprend des premier et second éléments de comparateur (64, 74) comprenant chacun des première et seconde entrées pour recevoir respectivement une valeur cible d'effort (Fr) et une valeur cible de position (Xr), et une sortie;

ledit moyen d'installation (6) comprend un bras de robot (66) et un moyen de détection d'effort (71) ainsi qu'un moyen de détection de position (72) pour détecter respectivement l'effort de préhension et la position de bras dudit bras de robot;

ledit second moyen de comparateur (3) comprend des troisième et quatrième éléments de comparateur (63, 73) possédant chacun des première et seconde entrées pour recevoir respectivement une valeur détectée d'effort (F) et une valeur détectée de position (X), et une sortie;

ledit premier élément de haut gain (61) possède des première et seconde entrées pour recevoir les sorties desdits troisième et quatrième éléments de comparateur (63, 73) et des première et seconde sorties pour produire respectivement des sorties vers ladite seconde entrée desdits premier et second éléments de comparateur (63, 73); et

ledit moyen de modèle de référence (2) comprend un modèle de référence floue (62) pour recevoir lesdites sorties dudit premier élément à haut gain (61) et pour fournir respectivement des sorties à ladite seconde entrée desdits troisième et quatrième éléments de comparateur (63, 73).

8. Dispositif de commande à suivi de modèle selon la revendication 7, caractérisé en ce qu'une partie basée sur les données de position du modèle de référence floue (62) est corrigée à l'aide des données de l'effort détecté.

9. Procédé de commande à suivi de modèle comprenant les étapes suivantes :

- l'établissement de caractéristiques désirées comme modèle de référence d'une installation;
- l'obtention de la sortie dudit modèle de référence pour une donnée d'entrée donnée;
- l'obtention d'une différence entre les données de sortie d'une installation et les données de sortie du modèle normal; procédé caractérisé par :
- l'entrée de ladite différence dans un premier moyen à haut gain;
- l'entrée d'une donnée de sortie dudit moyen à haut gain vers ledit modèle de référence;
- l'entrée de la différence entre les données de sortie dudit premier moyen à haut gain et une donnée de commande cible dans un second moyen à haut gain; et
- la commande de ladite installation à l'aide des données de sortie dudit second moyen à haut gain.

# F i g. 1

Fig. 2(a)

Fig. 2(b)

*Fig. 3*

REF MODEL INPUT

21 — REF MODEL Pm1

22 — REF MODEL Pm2

23 — REF MODEL Pm3

24 — WEIGHT CAL

R

25 — WEIGHT ADD AVRG

2'

Xm

*Fig. 4*

1ST HIGH GAIN ELEMENT INPUT

31 — HIGH GAIN K1

32 — HIGH GAIN K2

33 — HIGH GAIN K3

34 — WEIGHT CAL

R

35 — WEIGHT ADD AVRG

1'

1ST HIGH GAIN ELEMENT OUTPUT

11

Fig. 5(a)

Fig. 5(b)

Fig. 6(a)

Fig. 6(b)

12

Fig. 7

Fig. 8(a)

Fig. 8(b)

# Fig. 9

TARGET FORCE Fr

TARGET POSITION Xr

(ACTUATOR COMMAND)

64

65

2ND HIGH GAIN ELEMENT

68

66

ROBOT

71

FORCE DETECT

FORCE F

POSITION DETECT

POSITION X

72

74

61

1ST HIGH GAIN ELEMENT

63

FUZZY REF MODEL

73

62

ERROR

67

69

M A P

EP 0 445 729 B1

## $Fig.$ $10(a)$

FUZZY REF MODEL

if "condition is to control gripping force",
then "execute force control." (Gfm(s))


if "condition is free",
then "execute position control." (Gpm(s))

⋮

## $Fig.$ $10(b)$

FORCE CTRL
REF MODEL

POSITION CTRL
REF MODEL

ADAPTABILITY

1

0

O

DISTANCE FROM THE
GRIPPING POSITION

Fig. 11(a)   PRIOR ART

Fig. 11(b)   PRIOR ART